# FASCICULE DE BREVET EUROPEEN

(11) **EP 4 012 613 B1**
(45) Date de publication et mention de la délivrance du brevet: **26.06.2024**
(21) Numéro de dépôt: 21211603.2
(22) Date de dépôt: 01.12.2021
(51) Int. Cl.: G06K 19/07, H04W 4/80

(54) **PROCÉDÉ DE DÉVERROUILLAGE D'UN DISPOSITIF NFC**
VERFAHREN ZUR ENTRIEGELUNG EINER NFC-VORRICHTUNG
METHOD FOR UNLOCKING AN NFC DEVICE

(30) Priorité: 14.12.2020 FR 2013187
(43) Date de publication de la demande: 15.06.2022
(73) Titulaire: STMICROELECTRONICS (GRENOBLE 2) SAS, 38000 Grenoble (FR)
(72) Inventeur: KUNLIN, Thomas, 38600 Fontaine (FR)
(74) Mandataire: Cabinet Beaumont

(56) Documents cités:
- US-A1- 2015 294 126
- US-A1- 2018 189 770

## Description

### Domaine technique

La présente description concerne de façon générale les circuits électroniques et, plus particulièrement, les transpondeurs électromagnétiques ou étiquettes électroniques (tag, en anglais). La présente description s'applique en particulier aux dispositifs électroniques intégrant un circuit de communication en champ proche (Near-Field communication - NFC, en anglais), plus communément appelés dispositifs NFC, et notamment à la communication avec un autre dispositif par champ radiofréquence ou électromagnétique.

### Technique antérieure

Les systèmes de communication à transpondeurs électromagnétiques sont de plus en plus fréquents, en particulier depuis le développement des technologies de communication en champ proche (NFC - Near Field Communication).

Ces systèmes exploitent un champ électromagnétique radiofréquence généré par un dispositif NFC (terminal ou lecteur) pour détecter puis communiquer avec un autre dispositif NFC (carte) situé à portée.

Dans certains cas, le contenu du dispositif NFC doit rester inaccessible jusqu'à l'acquisition dudit dispositif par son utilisateur final. Le document US 2015/0294126 décrit un dispositif radio-identifié (RFID) et programmable mécaniquement. Le document US 2018/0189770 décrit un objet portable comprenant un dispositif de communication en champ proche.

### Résumé de l'invention

Il existe un besoin d'amélioration des dispositifs NFC.

Un mode de réalisation pallie tout ou partie des inconvénients des dispositifs NFC connus.

Un mode de réalisation prévoit un procédé dans lequel une fonctionnalité intraçable d'un premier dispositif de communication en champ proche est désactivée par une action sur un interrupteur matériel d'un état natif vers un deuxième état dans lequel le premier dispositif est visible en champ proche, et dans lequel lorsque l'interrupteur matériel est dans l'état natif, le premier dispositif est dans un mode de non réponse à toutes requêtes d'interrogation par champ proche, à l'exception d'une requête d'un deuxième dispositif selon un mode propriétaire, l'accès en mode propriétaire étant effectué après authentification du deuxième dispositif par le premier dispositif.

Un mode de réalisation prévoit un premier dispositif de communication en champs proche comprenant un interrupteur matériel configuré pour désactiver une fonctionnalité intraçable du premier dispositif suite à une action modifiant un état de l'interrupteur matériel d'un état natif vers un deuxième état dans lequel le premier dispositif est visible en champ proche, et lorsque l'interrupteur matériel est dans l'état natif, le premier dispositif est dans un mode de non réponse à toutes requêtes d'interrogation par champ proche, à l'exception d'une requête d'un deuxième dispositif selon un mode propriétaire, l'accès en mode propriétaire étant effectué après authentification du deuxième dispositif par le premier dispositif.

Selon un mode de réalisation, un détecteur est configuré pour détecter un changement d'état de l'interrupteur par rapport à l'état natif.

Selon un mode de réalisation, le premier dispositif est capable de recevoir des communications initiées par le deuxième dispositif lorsque l'interrupteur matériel est dans l'état natif.

Selon un mode de réalisation, l'action sur ledit interrupteur matériel provoque un déverrouillage du premier dispositif.

Selon un mode de réalisation, une action sur ledit interrupteur matériel est irréversible.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple de système de communication en champ proche du type auquel s'appliquent, à titre d'exemple, des modes de réalisation décrits ;
la figure 2A illustre de façon schématique un mode de mise en oeuvre d'un procédé de déverrouillage ;
la figure 2B illustre de façon schématique un autre mode de mise en oeuvre d'un procédé de déverrouillage ;
la figure 3 illustre de façon schématique la mise en oeuvre d'une communication par authentification entre deux dispositifs de communication en champ proche ; et
la figure 4 est un organigramme représentant des étapes d'un mode de mise en oeuvre d'une communication entre des dispositifs de communication en champ proche.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la génération des signaux radiofréquence et leur interprétation n'ont pas été détaillées, les modes de réalisation et modes de mise en oeuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Des dispositifs de communication en champ proche (NFC - Near Field Communication en anglais) ou transpondeurs électromagnétiques sont utilisés fréquemment dans des produits de consommation usuelle comme, par exemple, certaines étiquettes vestimentaires ou dans l'emballage de certains produits alimentaires. On en trouve également dans des produits électroniques. Par exemple, des téléphones peuvent contenir de tels dispositifs, ce qui permet l'utilisation d'applications de paiements sans contact ou encore d'identification (comme par exemple l'abonnement à des transports en communs) entre autres exemples.

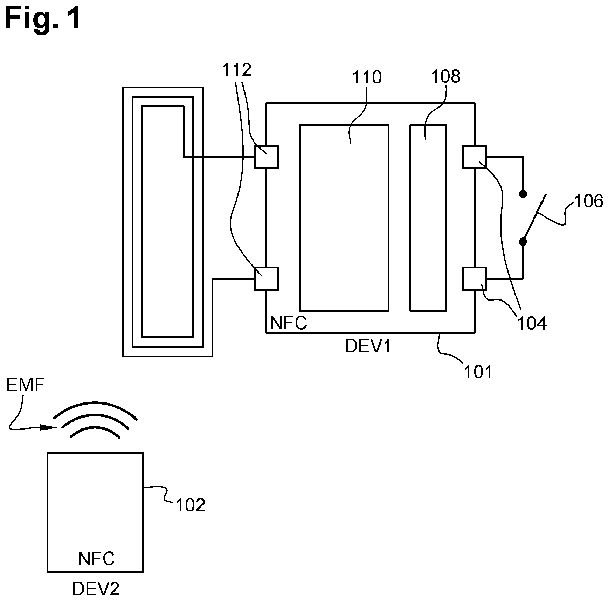

La figure 1 représente, de façon schématique et sous forme de blocs, un exemple de système de communication en champ proche du type auquel s'appliquent, à titre d'exemple, des modes de réalisation décrits.

Deux dispositifs de communication en champ proche 101 (DEV1) et 102 (DEV2) sont susceptibles de communiquer par couplage électromagnétique en champ proche. Selon les applications et pour une communication, les deux dispositifs peuvent par exemple fonctionner en mode poste à poste (de l'anglais peer-to-peer - P2P) ou dans un autre exemple, auquel s'applique la présente description, un des deux dispositifs fonctionne en mode lecteur tandis que l'autre fonctionne en mode carte.

Dans la suite de la description, on suppose qu'un premier dispositif DEV1 constitue un transpondeur électromagnétique de type étiquette électronique (RFID TAG) ou un dispositif NFC fonctionnant en mode carte, et qu'un deuxième dispositif DEV2 constitue un lecteur de transpondeur ou un dispositif NFC fonctionnant en mode lecteur. Le dispositif DEV1 tire, dans certaines application, l'énergie nécessaire au fonctionnement des circuits qu'il comporte du champ électromagnétique généré par le lecteur à portée duquel il se trouve.

Dans l'exemple de la figure 1, le dispositif NFC 102 (DEV2) ou lecteur va initier une communication avec le dispositif NFC 101 (DEV1) ou étiquette en émettant un champ électromagnétique EMF. Ce champ est capté par une antenne connectée (bornes 112) au dispositif DEV1 lorsque ce dernier se trouve à portée du dispositif DEV2. Dans d'autres exemples, le dispositif DEV1, par exemple un dispositif mixte en mode carte, peut contenir plusieurs antennes et/ou être lui aussi capable d'initier une communication par champ proche.

Le dispositif DEV1 comprend deux pattes 104 témoignant de l'état (ouvert ou fermé) d'un interrupteur matériel 106 à commutation, réversible ou irréversible, et un détecteur 108 de l'état de la connexion entre ces deux pattes 104. L'interrupteur matériel 106, sert, dans certaines utilisations, à assurer au consommateur que le produit est authentique et n'a, par exemple, jamais été ouvert. Autrement dit, l'interrupteur 106 fait habituellement office de sceau. Cela correspond à une boucle de garantie (tamper loop, en anglais) .

Le dispositif DEV1 comprend en outre une fonctionnalité intraçable 110 (untraceability feature, en anglais), c'est-à-dire que, lorsque cette fonctionnalité est activée, le dispositif DEV1 peut recevoir les communications initiées par le lecteur DEV2 mais il n'y répondra pas et apparaîtra comme invisible pour le lecteur DEV2. Quand cette fonctionnalité est activée, le dispositif DEV1 est alors intraçable par les autres dispositifs capables d'initier une communication. Une exception, permettant de communiquer avec le dispositif DEV1, consiste en une authentification d'un mode propriétaire suite à l'émission par le lecteur DEV2 d'une trame particulière reconnue par le dispositif DEV1 comme activant un mode propriétaire. Ce mode de communication permet, par exemple, de mettre à jour, ou d'effectuer une maintenance sur le produit, même lorsque la fonctionnalité intraçable est activée.

Les fonctions de boucle de garantie (tamper loop) et d'intraçabilité (untraceability feature) respectent les normes de transmission sans contact, telles que ISO14443 et ISO15693, et leur fonctionnement est connu en soi.

Lors de la production d'une étiquette électronique, un état (ouvert ou fermé) initial ou natif (ou d'usine) est affecté à l'interrupteur matériel 106. L'interrupteur 106 est de préférence, à commutation irréversible, c'est-à-dire qu'une fois enclenché (une fois commuté de l'état initial ouvert à l'état fermé ou inversement), il est alors impossible de lui réaffecter son état initial.

On fera par la suite référence à un lecteur ou dispositif en mode lecteur et à une étiquette ou carte ou dispositif en mode carte pour décrire les fonctions respectives des dispositifs DEV2 et DEV1, mais on notera que tout ce qui va être décrit par la suite s'applique, sauf précision contraire :
pour le premier dispositif DEV1, à tout transpondeur électromagnétique ou dispositif électronique de communication en champ proche fonctionnant à la manière d'un transpondeur électromagnétique, télé-alimenté ou non (par exemple, à batterie), par exemple, une étiquette électronique active ou passive de type étiquette d'identification radiofréquence (RFID TAG), une carte sans contact (contactless card), un dispositif NFC dédié au mode carte ou un dispositif NFC mixte fonctionnant en mode lecteur, etc. ;
pour le deuxième dispositif DEV2, à tout lecteur (reader) de transpondeur électromagnétique ou dispositif électronique de communication en champ proche fonctionnant à la manière d'un lecteur de transpondeur électromagnétique, par exemple un lecteur de carte sans contact, un lecteur d'étiquette électronique passive ou active, un dispositif NFC dédié au mode lecteur ou un dispositif mixte fonctionnant en mode lecteur, etc.

Lorsque l'étiquette ou carte DEV1 capte un champ électromagnétique généré par un lecteur à proximité, son détecteur 108 vérifie l'état de la connexion entre les pattes 104, c'est-à-dire l'état de l'interrupteur 106. Par exemple, si l'interrupteur est en position fermée, l'information reçue par le détecteur sera l'état 1 et si, au contraire, l'interrupteur est en position ouverte l'information reçue par le détecteur sera l'état 0.

Selon les modes de mise en oeuvre et de réalisation décrits, on prévoit de combiner les fonctions de garantie et d'intraçabilité. Plus précisément, on prévoit d'utiliser le commutateur de garantie pour déverrouiller l'intraçabilité d'une étiquette ou carte et la rendre visible.

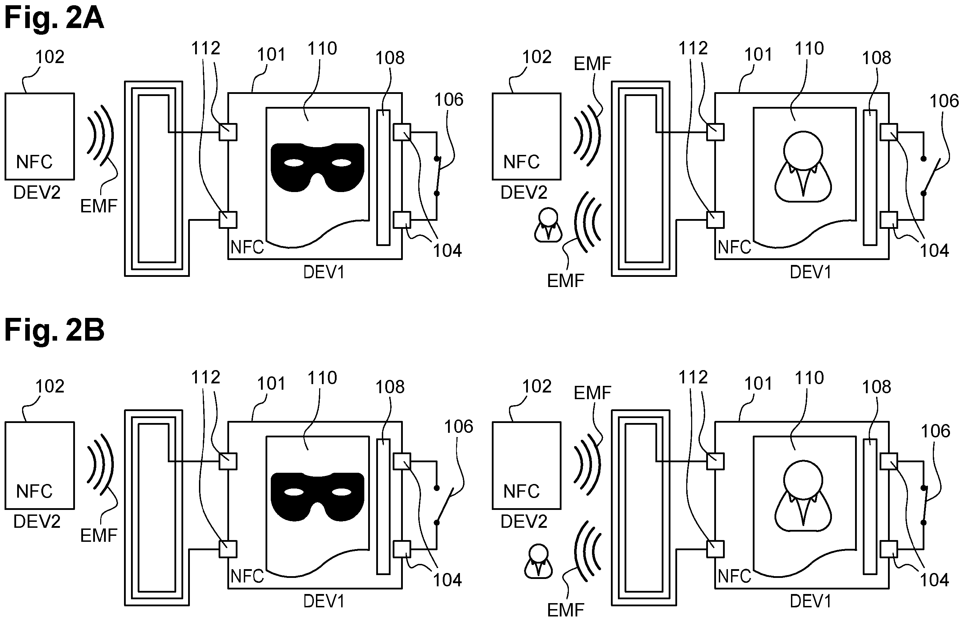

La figure 2A illustre de façon schématique un mode de mise en oeuvre d'un procédé de déverrouillage.

Dans cet exemple, on suppose que l'interrupteur 106 est dans un état natif ou initial fermé (état 1). Dans ce cas, lors de la production de l'étiquette ou carte 101, DEV1, (à gauche de la figure 2A), la fonctionnalité intraçable est activée et est associée à un état 1 fourni par le détecteur 108. Lorsque que le lecteur 102, DEV2, initie une communication et qu'une étiquette ou carte DEV1 se trouve à portée d'un champ EMF généré par le lecteur, l'étiquette ou carte entame un protocole de lecture de trames d'interrogation émises par le lecteur. La position de l'interrupteur 106 étant fermée, le détecteur 108 détecte l'état 1 via les pattes 104 et la fonctionnalité intraçable reste activée. Ainsi l'étiquette ou carte DEV1 ne répond pas aux trames émises par le lecteur et ne renvoie donc pas de communication. Le lecteur DEV2 ne détecte alors pas l'étiquette ou carte DEV1, ou considère qu'il s'agit d'un transpondeur incompatible avec les fonctionnalités que le lecteur supporte.

Dans certains cas, il est utile de rendre intraçable un dispositif en mode carte jusqu'à son acquisition pour son usage final. Cela peut, par exemple, empêcher un autre dispositif en mode lecteur de récupérer des données contenues dans l'étiquette ou carte, ou, dans un autre exemple, empêcher un autre dispositif en mode lecteur de modifier un code source contenu dans l'étiquette ou carte DEV1 (par exemple le prix du produit dans le cas d'une étiquette vestimentaire). En d'autres termes, laisser activée la fonctionnalité intraçable de l'étiquette ou carte DEV1 tout au long de son parcours commercial permet d'empêcher un possible piratage et garantit le fonctionnement correct de l'étiquette ou carte DEV1.

Lorsque le dispositif en mode carte DEV1 est acquis par son utilisateur final, une manoeuvre (par exemple initiée par l'utilisateur au déballage du produit) va actionner de manière irrémédiable l'interrupteur matériel 106, le passant de l'état initial fermé à l'état ouvert (comme illustré en partie droite de la figure 2A). Selon un exemple de réalisation, l'interrupteur 106 est un fil conducteur qui est rompu lors du déballage du produit. Ainsi, lorsque le dispositif en mode carte DEV1 est à portée d'un dispositif en mode lecteur DEV2 qui génère un champ électromagnétique EMF, le dispositif DEV1 (généralement télé-alimenté par ce champ) et, plus précisément, son détecteur 108 détecte le changement d'état de l'interrupteur, (par exemple qui renvoie l'état 0 et non plus l'état 1). Le détecteur désactive alors la fonctionnalité intraçable de l'étiquette ou carte DEV1. L'étiquette ou carte DEV1 peut alors échanger, via le champ EMF, avec le lecteur DEV2.

Ainsi, l'usage de l'interrupteur 106 est détourné de son usage habituel comme marque d'authenticité. Son action est ici reliée à la fonctionnalité intraçable, la désactivant lorsque l'interrupteur est commuté de manière réversible ou irréversible.

La figure 2B illustre de façon schématique un autre mode de mise en oeuvre d'un procédé de déverrouillage.

Par rapport au mode de mise en oeuvre illustré en figure 2A, on prévoit ici que l'état initial ou natif de l'interrupteur matériel 106, présenté à gauche de la figure, est ouvert. Lorsque le dispositif contenant le détecteur est alimenté (à portée d'un autre dispositif NFC), le détecteur 108 détecte un état ouvert (état 0) de l'interrupteur 106, via les pattes 104. La fonctionnalité intraçable est dans ce cas associée à l'état 0. Dans cette configuration, lorsque le dispositif en mode carte DEV1 est à portée d'un lecteur DEV2, l'information détectée par le détecteur 108 reste, dans cet exemple, toujours 0, la fonctionnalité intraçable reste activée et le dispositif DEV1 ne répond pas au dispositif DEV2.

A droite de la figure 2B est illustré le dispositif en mode carte DEV1 une fois que l'interrupteur matériel 106 a été actionné. L'interrupteur 106 est alors maintenant en position fermée (par exemple, l'interrupteur 106 est actionné lorsque l'utilisateur enlève un écran isolant entre deux connectiques du dispositif 101 reliées aux pattes 104) . Ainsi, lorsque le transpondeur DEV1 est à portée du lecteur DEV2, le détecteur 108 détecte le nouvel état, par exemple 1, via les pattes 104 suite au changement d'état de l'interrupteur, et désactive la fonctionnalité intraçable du dispositif.

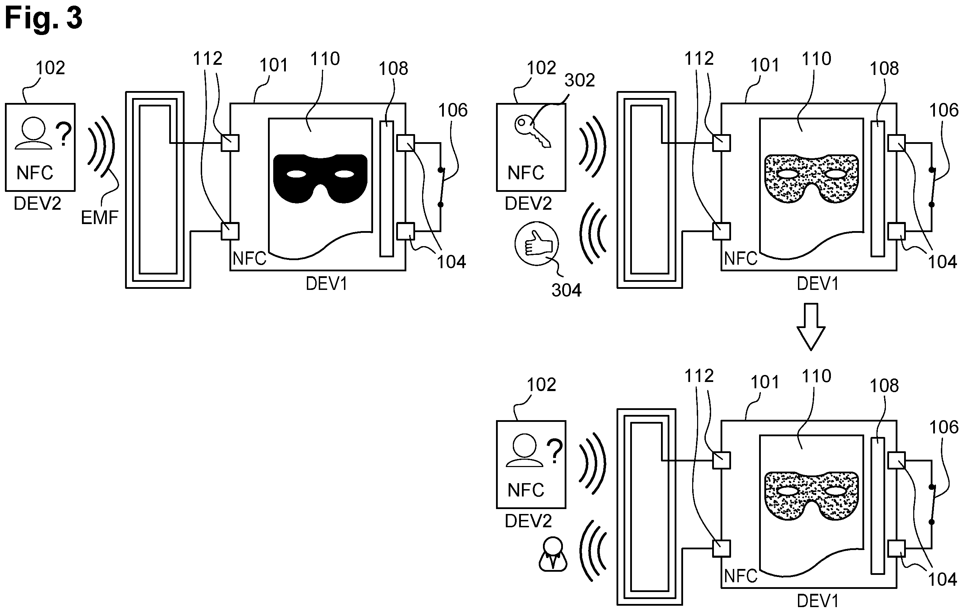

La figure 3 illustre de façon schématique la mise en oeuvre d'une communication par authentification entre deux dispositifs NFC.

Dans l'exemple de la figure 3, la fonctionnalité intraçable est associée à l'état initial fermé (état 1) de l'interrupteur 106 et est activée.

On suppose (schéma en haut à gauche de la figure 3) qu'un lecteur NFC DEV2 standard cherche à accéder à une étiquette ou carte NFC DEV1. Le dispositif DEV1 reçoit le signal émis par le dispositif DEV2 via l'antenne 112. L'interrupteur 106 étant fermé, le détecteur 108 détecte l'état 1 et la fonctionnalité intraçable reste activée. L'étiquette ou carte DEV1 ne répond pas au lecteur DEV2 qui reste en mode d'interrogation (polling) et ne détecte alors pas le dispositif DEV1.

Dans certains cas, il est utile, voir nécessaire, d'effectuer une opération de maintenance ou une opération de mise à jour du dispositif DEV1. De telles opérations sont généralement effectuées même pendant la vie du produit. Il peut s'agir également, pour des étiquettes électroniques associées à des produits, de pouvoir y accéder pour inventaire, par exemple dans un magasin ou entrepôt. Cet accès ne doit cependant pas conduire à une commutation de l'étiquette en mode traçable, celle-ci devant conserver ce mode tant qu'une action mécanique n'est pas opérée sur le commutateur 106.

En haut à droite de la figure 3 est illustré un exemple de mise en oeuvre d'une communication, par exemple dans le but d'effectuer une des opérations susmentionnées. Pour cela, on prévoit que, lorsque qu'un lecteur DEV2 active une étiquette ou carte DEV1 selon un protocole particulier, typiquement associé à un processus d'authentification à clé 302 publique ou à secret partagé, l'étiquette ou carte DEV1 reconnaît la procédure d'authentification et si la clef fournie par le lecteur DEV2 est valide, l'étiquette ou carte DEV1 autorise l'accès en mode propriétaire 304 au dispositif DEV2. L'étiquette ou carte devient visible, donc accessible au lecteur, alors même que le mode non-traçable reste activé (le commutateur 106 restant fermé). Un tel accès en mode propriétaire en en lui-même usuel.

En bas à droite de la figure 3 est illustrée la communication entre les dispositifs DEV2 et DEV1 lorsque le lecteur DEV2 est en mode propriétaire. L'interrupteur 106 est toujours dans son état initial fermé (état 1). Le détecteur 108 ne détecte donc pas de changement d'état de l'interrupteur 106 et la fonctionnalité intraçable reste activée. En pratique, la vérification de l'état de l'interrupteur est réalisée à la mise sous tension du transpondeur. Le lecteur DEV2 ayant accès à l'étiquette ou lecteur DEV1 en mode propriétaire, la communication est possible entre les deux dispositifs, et le lecteur DEV2 peut, par exemple effectuer une opération de maintenance ou de mise à jour de l'étiquette ou carte DEV1 ou capter son identifiant à des fin de comptage ou d'inventaire. Tout autre lecteur, non illustré sur la figure 3, qui ne possède pas la clef ou mot de passe, ne pourra pas communiquer avec l'étiquette ou carte DEV1.

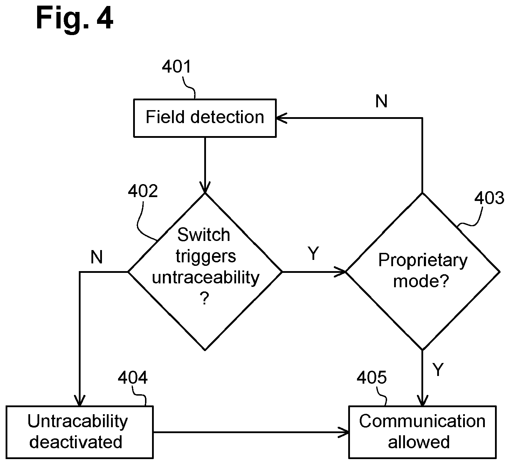

La figure 4 est un organigramme représentant des étapes d'un mode de mise en oeuvre d'une communication entre des dispositifs NFC.

Dans une étape 401 (Field détection), une étiquette ou carte NFC DEV1 détecte un champ électromagnétique généré par un autre dispositif NFC à proximité, typiquement un lecteur DEV2. Le détecteur 108 de l'étiquette ou carte DEV1 détecte, par le biais des contacts 104 (non représentés en figure 4), l'état de l'interrupteur 106. En particulier, elle détecte, dans une étape 402 (switch triggers untraceability ?), si l'interrupteur 106 est toujours dans son état initial ou non. L'état initial de l'interrupteur peut être soit ouvert (par exemple un écran isolant entre deux connectiques reliées aux pattes 104) soit fermé (par exemple, l'interrupteur 106 est un fil conducteur de type fusible reliant les pattes 104).

Dans le cas où l'interrupteur 106 est toujours dans son état initial (sortie "Y" du bloc 402), le dispositif (le circuit de l'étiquette) va, dans une étape 403 (proprietary mode ?), vérifier si la communication consiste en une procédure d'authentification pour un accès en mode propriétaire par le lecteur DEV2. Si (sortie "N" du bloc 403) l'on n'est pas en présence d'une procédure d'authentification, le procédé boucle sur l'étape 401 de détection de champ et ne communique pas en retour avec le dispositif DEV2. Dans le cas où DEV2 initie une procédure d'authentification, mais que l'authentification échoue, par exemple dans le cas où la clé n'est pas reconnue, le procédé boucle également sur l'étape 401. Bien sûr, dans certains modes de mise en oeuvre, en cas de procédure d'authentification qui échoue, le procédé peut mettre en oeuvre une étape intermédiaire, non présentée dans la figure 4, informant DEV2 que sa tentative d'authentification a échoué. Dans le cas où l'authentification est réussie, le procédé se termine (sortie "Y" du bloc 403) sur une étape 405 (Communication allowed), dans laquelle la communication entre les deux dispositifs est autorisée.

Dans le cas où le détecteur 108 détecte un changement de l'état initial de l'interrupteur 106 (sortie "N" du bloc 402), la fonctionnalité intraçabilité est désactivée dans une étape 404 (Untraceability deactivated) et le procédé se termine sur l'étape 405 autorisant la communication entre les deux dispositifs.

Un avantage des modes de réalisation décrits est qu'ils permettent de conserver une non-détectabilité d'une étiquette ou carte tant qu'une action matérielle n'a pas été effectuée sur sa boucle de garantie. Cette combinaison des deux fonctions d'intraçabilité et de boucle de garantie améliore la sécurité des étiquettes et carte contre des fraudes ou attaques tout en autorisant un fonctionnement correct en mode propriétaire. Toutefois, on retrouve alors le fonctionnement usuel qui est plus sensible à d'éventuelles attaques. Les modes de réalisation décrits sécurisent plus particulièrement l'étiquette ou carte tant que sa boucle de garantie est active.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la mise en oeuvre des protocoles d'interrogation (polling), d'authentification, et de communication entre des dispositifs de communication en champ proche est en elle-même usuelle et les modes de réalisation décrits sont compatibles avec les protocoles usuels.

## Revendications

1. Procédé dans lequel une fonctionnalité intraçable d'un premier dispositif de communication en champ proche (101, DEV1) est désactivée par une action sur un interrupteur matériel (106), cette action modifiant un état de l'interrupteur matériel (106) d'un état natif vers un deuxième état dans lequel le premier dispositif est visible en champ proche,
**caractérisé en ce que**
lorsque l'interrupteur matériel est dans l'état natif, le premier dispositif est dans un mode de non réponse à toutes requêtes d'interrogation par champ proche, à l'exception d'une requête d'un deuxième dispositif (102, DEV2) selon un mode propriétaire, l'accès en mode propriétaire étant effectué après authentification du deuxième dispositif (101, DEV1) par le premier dispositif.

2. Premier dispositif de communication en champ proche (101, DEV1) comprenant un interrupteur matériel (106) configuré pour désactiver une fonctionnalité intraçable du premier dispositif suite à une action modifiant un état de l'interrupteur matériel d'un état natif vers un deuxième état dans lequel le premier dispositif est visible en champ proche, et
**caractérisé en ce que**
lorsque l'interrupteur matériel est dans l'état natif, le premier dispositif est dans un mode de non réponse à toutes requêtes d'interrogation par champ proche, à l'exception d'une requête d'un deuxième dispositif (102, DEV2) selon un mode propriétaire, l'accès en mode propriétaire étant effectué après authentification du deuxième dispositif (101, DEV1) par le premier dispositif.

3. Procédé selon la revendication 1 ou premier dispositif selon la revendication 2, dans lequel un détecteur (108) est configuré pour détecter un changement d'état de l'interrupteur (106) par rapport à un état natif.

4. Procédé selon la revendication 1 ou 3, ou premier dispositif selon la revendication 2 ou 3, dans lequel le premier dispositif (101, DEV1) est capable de recevoir des communications initiées par le deuxième dispositif (102, DEV2) lorsque l'interrupteur matériel (106) est dans l'état natif.

5. Procédé selon l'une quelconque des revendications 1, 3 et 4, ou premier dispositif selon l'une quelconque des revendications 2 à 4, dans lequel l'action sur ledit interrupteur matériel (106) provoque un déverrouillage du premier dispositif.

6. Procédé selon l'une quelconque des revendications 1, 3 à 5, ou premier dispositif selon l'une quelconque des revendications 2 à 5, dans lequel l'action sur ledit interrupteur matériel (106) est irréversible.

## Patentansprüche

1. Verfahren, bei dem ein Unauffindbarkeitsmerkmal eines ersten Nahfeld-Kommunikationsgeräts (101, DEV1) durch eine Aktion an einem Hardware-Schalter (106) deaktiviert wird, wobei diese Aktion einen Zustand des Hardware-Schalters (106) von einem ursprünglichen Zustand in einen zweiten Zustand ändert, in dem das erste Gerät im Nahfeld sichtbar ist,
**dadurch gekennzeichnet, dass**, wenn sich der Hardware-Schalter in dem ursprünglichen Zustand befindet, die erste Vorrichtung in einem Zustand dbefindet in dem es auf keine Nahfeld-Abrufanforderungen antwortet, mit Ausnahme einer Anforderung von einer zweiten Vorrichtung (102, DEV2) gemäß einem proprietären Modus, wobei der Zugriff im proprietären Modus nach der Authentifizierung der zweiten Vorrichtung (101, DEV1) durch die erste Vorrichtung durchgeführt wird.

2. Erste Nahfeld-Kommunikationsvorrichtung (101, DEV1), die einen HardwareSchalter (106) aufweist, der so konfiguriert ist, dass er ein Unauffindbarkeitsmerkmal der ersten Vorrichtung als Ergebnis einer Aktion deaktiviert, die einen Zustand des Hardware-Schalters von einem ursprünglichen Zustand in einen zweiten Zustand ändert, in dem die erste Vorrichtung im Nahfeld sichtbar ist, und
**dadurch gekennzeichnet, dass**, wenn sich der Hardware-Schalter in dem ursprünglichen Zustand befindet, sich die erste Vorrichtung in einem Modus befindet, in dem sie auf keine Nahfeld-Abrufanforderungen antwortet, mit Ausnahme einer Anforderung von einer zweiten Vorrichtung (102, DEV2) gemäß einem proprietären Modus, wobei der Zugriff im proprietären Modus nach der Authentifizierung der zweiten Vorrichtung (101, DEV1) durch die erste Vorrichtung durchgeführt wird.

3. Verfahren nach Anspruch 1 oder erste Vorrichtung nach Anspruch 2, wobei ein Detektor (108) konfiguriert ist, um eine Zustandsänderung des Schalters (106) in Bezug auf einen ursprünglichen Zustand zu detektieren.

4. Verfahren nach Anspruch 1 oder 3 oder erste Vorrichtung nach Anspruch 2 oder 3, wobei die erste Vorrichtung (101, DEV1) in der Lage ist, von der zweiten Vorrichtung (102, DEV2) initiierte Kommunikationen zu empfangen, wenn sich der Hardware-Schalter (106) im ursprünglichen Zustand befindet.

5. Verfahren nach einem der Ansprüche 1, 3 und 4 oder erste Vorrichtung nach einem der Ansprüche 2 bis 4, wobei die Aktion am Hardware-Schalters (106) eine Entriegelung der ersten Vorrichtung bewirkt.

6. Verfahren nach einem der Ansprüche 1, 3 bis 5 oder erste Vorrichtung nach einem der Ansprüche 2 bis 5, wobei die Aktion am Hardwareschalter (106) irreversibel ist.

## Claims

1. Method wherein an untraceability feature of a first near-field communication device (101, DEV1) is deactivated by an action on a hardware switch (106), this action modifying a state of the hardware switch (106) from a native state to a second state in which the first device is visible in near field,
**characterized in that** when the hardware switch is in the native state, the first device is in a state of lack of response to all near-field polling requests, except for a request from a second device (102, DEV2) according to a proprietary mode, the access in proprietary mode being performed after the authentication of the second device (101, DEV1) by the first device.

2. First near-field communication device (101, DEV1) comprising a hardware switch (106) configured to deactivate an untraceability feature of the first device as a result of an action modifying a state of the hardware switch from a native state to a second state in which the first device is visible in near field, and
**characterized in that** when the hardware switch is in the native state, the first device is in a mode of lack of response to all near-field polling requests, except for a request from a second device (102, DEV2) according to a proprietary mode, the access in proprietary mode being performed after the authentication of the second device (101, DEV1) by the first device.

3. Method according to claim 1 or first device according to claim 2, wherein a detector (108) is configured to detect a state change of the switch (106) with respect to a native state.

4. Method according to claim 1 or 3, or first device according to claim 2 or 3, wherein the first device (101, DEV1) is capable of receiving communications initiated by the second device (102, DEV2) when the hardware switch (106) is in the native state.

5. Method according to any of claims 1, 3, and 4, or first device according to any of claims 2 to 4, wherein the action on said hardware switch (106) causes an unlocking of the first device.

6. Method according to any of claims 1, 3 to 5, or first device according to any of claims 2 to 5, wherein the action on said hardware switch (106) is irreversible.
